Europäisches Patentamt

European Patent Office

Office européen des brevets

(19)

(11) **EP 0 844 726 A2**

(12) **EUROPEAN PATENT APPLICATION**

(43) Date of publication:
27.05.1998 Bulletin 1998/22

(51) Int. Cl.⁶: **H02M 3/28**

(21) Application number: **97116167.4**

(22) Date of filing: **17.09.1997**

(84) Designated Contracting States:
**AT BE CH DE DK ES FI FR GB GR IE IT LI LU MC NL PT SE**

(30) Priority: **20.11.1996 JP 325985/96**

(71) Applicant: **SHINKO CO., LTD.**
**Osaka (JP)**

(72) Inventor:
**Nakauchi, Masayoshi,**
**c/o Shinko Co., Ltd.**
**Taisho-ku, Osaka (JP)**

(74) Representative:
**von Fischern, Bernhard, Dipl.-Ing. et al**
**Hoffmann - Eitle,**
**Patent- und Rechtsanwälte,**
**Arabellastrasse 4**
**81925 München (DE)**

(54) **Power supply unit for discharge**

(57) A power supply unit for discharging static electricity which accurately detects contamination of an electrode. The power supply unit for discharge is provided with a converter (1) for converting an alternating current into a direct current, an inverter (2) for inverting the direct current from the converter (1) into an alternating current, a high voltage transformer (3) for raising an AC voltage from the inverter (2) to a predetermined voltage to be impressed on an electrode (4), and a feedback control device (5) for detecting and operating an output voltage of the high voltage transformer (3) and controlling the inverter (2) in order to maintain the output AC voltage of the inverter (2) constant. The feedback control device (5) possesses a device (15) for transmitting PWM wave. The inverter (2) functions due to a PWM wave having a carrier signal.

Fig 1

EP 0 844 726 A2

## Description

This invention relates to a power supply unit for discharge.

A power supply unit for impressing a high voltage on an ionizer electrode of an electrostatic assist system typically possesses an extremely simple circuit wherein a high voltage transformer converts an input AC voltage into a high voltage.

A conventional power supply unit is provided with a circuit which detects contamination (for example, dust) of an ionizer electrode. In this power supply unit, a change of an output voltage corresponding to an electrode length is established to a prescribed output voltage through a voltage setting switch which changes winding numbers of a primary side of the transformer by stages and contamination is detected by operating a change in voltage caused by resonance.

The foregoing power supply unit which converts an input AC voltage into a high voltage does not discharge sufficiently because a change in the input voltage directly influences a value of the output voltage (high voltage) impressed on the ionizer electrode.

The conventional power supply unit in which contamination is detected requires bothersome establishment of a prescribed output voltage because it is necessary to clean the electrode. It is impossible to accurately detect electrode contamination corresponding to the electrode length because voltage changes against contamination of a certain level more abruptly when the load is nearer to a rated load and more gently when the load is lighter.

It is therefore an object of the present invention to provide a power supply unit for discharge where in a stable high voltage is impressed on an electrode for discharge. It is another object of the present invention to provide a power supply unit for discharge wherein the whole unit is compact. It is still another object of the present invention to provide a power supply unit for discharge wherein contamination of the electrode is accurately detected corresponding to the length of the electrode.

These objects are solved according to the present invention by power supply unit for discharging including the features of claim 1. Furthermore detailed embodiment is described in the dependent claims 2 and 3.

The present invention will be described with reference to the accompanying drawings, in which:

Figure 1 is a block diagram showing an embodiment of the present invention; and
Figure 2 is a partly enlarged block diagram.

Preferred embodiments of the present invent ion will now be described with reference to the accompanying drawings.

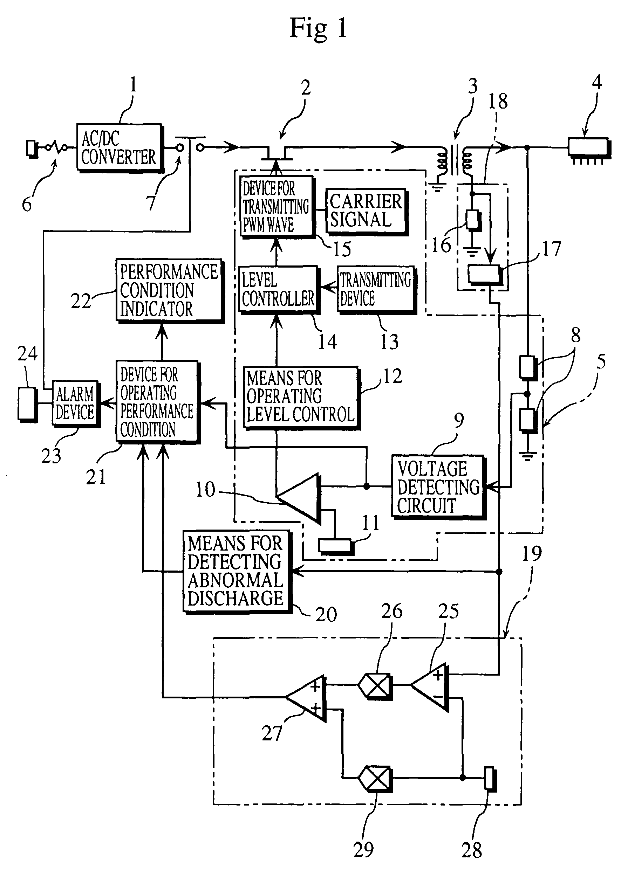

Figure 1 shows an embodiment of a power supply unit for discharge according to the present invention which impresses a high voltage on an ionizer electrode for discharging static electricity of a dielectric sheet. This power supply unit for discharge is provided with a converter 1 for converting an alternating current into a direct current, an inverter 2 for converting the direct current from the converter 1 into an alternating current, a high voltage transformer 3 for raising an AC voltage from the inverter 2 to a predetermined voltage to be impressed on an electrode, and a feedback control device 5 which detects and operates a voltage outputted from the high voltage transformer 3 and controls the inverter 2 in order to maintain the AC voltage outputted from the inverter 2 constant.

An electrode 4 having electrode needles is connected with an output side (secondary side) of the high voltage transformer 3. The electrode 4 is an ionizer electrode used for discharging static electricity of a dielectric sheet.

An input side of the converter 1 is connected to a commercial power supply through a fuse 6. A cut-off relay 7 for compulsorily breaking direct current supply from the converter 1 to the inverter 2 is arranged between the converter 1 and the inverter 2. The inverter 2 comprises a CMOS switching transistor and functions due to a PWM wave from the feedback control means 5 as described later in detail.

The feedback control means 5 is provided with an output voltage sensor 8 connected to an output side (secondary side) of the high voltage transformer 3, a voltage detecting circuit 9 for detecting the output voltage, an error operation device 10 for calculating error of an output signal of the voltage detecting circuit 9, a device 11 for setting output voltage connected to the error operation device 10, a device 12 for operating level control which calculates in order to control level upon receipt of an output signal from the error operation device 10, a transmitting device 13 which sends a signal of a predetermined frequency (for example, 50 Hz), a level controller 14 for outputting a level control signal on receiving the signal from the means 12 for operating level control and the transmitting device 13, and a device 15 for transmitting PWM wave which sends a PWM wave having a carrier signal to the inverter 2 on receiving the level control signal from the level controller 14.

The feedback control means 5 possesses the device 15 for transmitting PWM wave, and the inverter 2 functions due to a PWM wave having a carrier signal. The inverter 2 comprising a CMOS switching transistor amplifies the PWM wave having a carrier signal. A calorific value of the inverter 2 thereby decreases. An iron core of the high voltage transformer 3 does not respond to high frequency of the PWM wave, and only a voltage of commercial frequency appears at the output side (secondary side).

The output side of the high voltage transformer 3 is connected with a device 18 for detecting output current possessing an output current sensor 16 and a current detecting circuit 17, and the current detecting circuit 17 of the device 18 for detecting output current is connected with a device 19 for adjusting sensitivity of electrode contamination and a device 20 for detecting abnormal discharge in parallel. The means 18 for detecting output current detects an output current of the high voltage transformer 3, and the output current detected by the means 18 for detecting output current and a parameter of the electrode length are previously inputted into the means 19 for adjusting sensitivity of electrode contamination.

Moreover, a device 21 for operating performance condition is connected with an output side of the means 19 for adjusting sensitivity of electrode contamination and an output side of the means 20 for detecting abnormal discharge. The means 21 for operating performance condition is connected with an output side of the voltage detecting circuit 9 of the feedback control means 5 in parallel connection with the error operation device 10. The means 21 for operating performance condition is also connected with a performance condition indicator 22 and an alarm device 23. The alarm device 23 is connected to the cut-off relay 7 and an external alarming device 24.

The means 19 for adjusting sensitivity of electrode contamination operates an output current of the high voltage transformer 3 and a parameter of the electrode length, and maintains contamination sensitivity constant. The means 19 for adjusting sensitivity of electrode contamination is provided with a subtracter 25, a multiplier 26, an adder 27, a device 28 for setting reference value, and a multiplier 29. The device 28 for setting reference value establishes the parameter of the electrode length beforehand. The parameter of the electrode length and the output current value sent from the current detecting circuit 17 are operated through the subtracter 25, multiplier 26, adder 27, and multiplier 29 in order to obtain a fixed contamination sensitivity corresponding to the electrode length. The foregoing operation, excluding inputting the parameter of the electrode length at the device 28 for setting reference value, is conducted by a digital microcomputer.

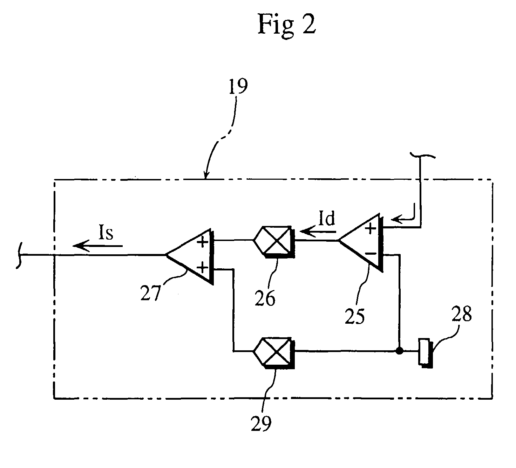

The fixed contamination sensitivity corresponding to the electrode length is obtained as explained below with reference to the block diagram of Figure 2 showing the means 19 for adjusting sensitivity of electrode contamination. Expressing a current due to electrostatic capacity per 1 meter of cable as $I_1$ (mA/m), a current due to electrostatic capacity per 1 meter of electrode as $I_2$ (mA/m), a current due to a discharge current per 1 meter of electrode as $I_3$ (mA/m), a cable length as $L_1$ (m), and an electrode length as $L_2$ (m), in initial adjustment when the electrode is clean, a whole load current I is $I = I_1 \times L_1 + I_2 \times L_2 + I_3 \times L_2$. The subtracter 25 of the device 28 for setting reference value arranges a contamination sensitivity signal Id to be zero, a gain of the multiplier 29 is changed, and an output signal is initially established to a standard indicating value Is.

When the electrode is contaminated and electrostatic capacity per 1 meter of electrode length increases for $\delta C$, load current $\delta I_2$ increases for $K \times \delta C$. K is expressed by a function $2\pi \times f \times E$. In this function, frequency is expressed as f, and electrode impressed voltage is expressed as E. Owing to the contamination of the electrode, the contamination sensitivity signal Id increases from Id = 0 to $Id = \delta I_2 \times L_2 \times D$. The electrostatic capacity caused by contamination of the electrode increases in direct proportion to the electrode length, therefore when D is arranged to be $D = K / L_2$, $Id = \delta I_2 \times L_2 \times D = \delta I_2 \times L_2 \times K / L_2 = \delta I_2 \times K$.

It is therefore possible to ignore the electrode length $L_2$. That is to say, the contamination sensitivity signal Id is not influenced by the electrode length $L_2$. A fixed contamination sensitivity signal can be obtained regardless of the length of the electrode by arranging D to be $K / L_2$ or a value proportioned to $K / L_2$ (through the device 28 for setting reference value) as a parameter of the electrode length.

According to this power supply unit for discharge, a stable high voltage is impressed on the electrode 4, and it is possible to conduct discharge accurately and uniformly. Moreover, the inverter 2 (CMOS switching transistor) amplifies a PWM wave and a calorific value is decreased, therefore the casing can be sealed hermetically and made small. As a result, the power supply unit for discharge as a whole becomes compact. A parameter of the electrode length is established by the device 28 for setting reference value of the means 19 for adjusting sensitivity of electrode contamination, therefore a fixed contamination sensitivity signal is obtained regardless of the length of the electrode 4.

The present invention composed as described above provides the following effects.

A stable high voltage is impressed on the electrode 4, and it is possible to discharge accurately and uniformly. When the present invention is applied to a discharge unit installed in facilities for producing and processing strip-shaped objects such as film or paper, the strip-shaped objects are free from troubles caused by static electricity.

A calorific value of the inverter 2 decreases owing to a PWM wave, and it is therefore possible to hermetically seal the casing of this power supply unit and make the casing small. The power supply unit for discharge as a whole thereby becomes compact.

A fixed contamination sensitivity signal is obtained regardless of the length of the electrode 4. As a result, degree of contamination of the electrode 4 is accurately detected in order to judge precisely when to clean the electrode 4. This saves useless cleaning. It is possible to timely clean the electrode 4 and prevent occurrence of accidents and troubles.

While preferred embodiments of the present invention have been described in this specification, it is to be understood that the invention is illustrative and not restrictive, because various changes are possible within the spirit and indispensable features.

**Claims**

1. A power supply unit for discharge comprising:

   a converter (1) for converting an alternating current into a direct current;
   an inverter (2) for converting the direct current from the converter (1) into an alternating current;
   a high voltage transformer (3) for raising an AC voltage from the inverter (2) to a predetermined voltage to be impressed on an electrode (4); and
   feedback control means (5) which detects an output voltage from said high voltage transformer (3), operates the output voltage, and controls said inverter (2) in order to maintain the output AC voltage of said inverter (2) constant.

2. The power supply unit for discharge as set forth in claim 1 characterized in that the feedback control means (5) possesses a device (15) for transmitting PWM wave and the inverter (2) functions due to a PWM wave having a carrier signal.

3. The power supply unit for discharge as set forth in claim 1 characterized in that means (18) for detecting an output current of the high voltage transformer (3) and means (19) for adjusting sensitivity of electrode contamination where the output current detected by said means (18) for detecting output current and a parameter of an electrode length are inputted beforehand, and said means (19) for adjusting sensitivity of electrode contamination operates the output current of said high voltage transformer (3) and the parameter of said electrode length and maintains contamination sensitivity constant.

# Fig 1

# Fig 2